# EUROPÄISCHE PATENTSCHRIFT

(11) **EP 3 586 695 B1**
(45) Veröffentlichungstag und Bekanntmachung des Hinweises auf die Patenterteilung: **02.08.2023**
(21) Anmeldenummer: 19176853.0
(22) Anmeldetag: 28.05.2019
(51) Int. Cl.: A47J 31/44

(54) **VERFAHREN UND VORRICHTUNG ZUR AUTOMATISCHEN HÖHENVERSTELLUNG EINES AUSLAUFS EINES GETRÄNKEAUTOMATEN UND GETRÄNKEAUTOMAT**
METHOD AND DEVICE FOR AUTOMATIC HEIGHT ADJUSTMENT OF A BEVERAGE OUTLET OF A BEVERAGE MACHINE AND BEVERAGE MACHINE
PROCÉDÉ ET DISPOSITIF DE RÉGLAGE AUTOMATIQUE DE LA HAUTEUR D'UNE UNITÉ D'ÉCOULEMENT D'UN DISTRIBUTEUR AUTOMATIQUE DE BOISSONS ET DISTRIBUTEUR AUTOMATIQUE DE BOISSONS

(30) Priorität: 22.06.2018 DE 102018115021
(43) Veröffentlichungstag der Anmeldung: 01.01.2020
(73) Patentinhaber: Miele & Cie. KG, 33332 Gütersloh (DE)
(72) Erfinder: Beier, Dominic, 33332 Gütersloh (DE); Lind, Martin, 33397 Rietberg (DE); Kersting, André, 59329 Wadersloh (DE)

(56) Entgegenhaltungen:
- EP-A1- 1 647 951
- EP-A1- 2 292 127
- EP-A1- 3 275 348
- DE-A1-102015 109 249

## Beschreibung

Der hier vorgestellte Ansatz betrifft ein Verfahren und eine Vorrichtung zur automatischen Höhenverstellung eines Auslaufs eines Getränkeautomaten sowie einen Getränkeautomaten. Die DE 10 2015 109 249 A1 beschreibt ein Verfahren zum Höhenverstellen eines Getränkeauslaufs eines Getränkeautomaten, insbesondere eines Kaffeevollautomaten.

Die EP 1 647 951 A1 offenbart ein Verfahren zur automatischen Höhenverstellung eines Getränkeauslaufs aufgrund eines abgespeicherten Vorgabewertes. Ferner ist eine separat zu aktivierende Betriebsart zum Programmieren der Vorgabewerte vorgesehen. Dem hier vorgestellten Ansatz liegt die Aufgabe zugrunde, ein verbessertes Verfahren und eine verbesserte Vorrichtung zur automatischen Höhenverstellung eines Auslaufs eines Getränkeautomaten und einen verbesserten Getränkeautomaten zu schaffen. Erfindungsgemäß wird diese Aufgabe durch ein Verfahren und eine Vorrichtung zur automatischen Höhenverstellung eines Auslaufs eines Getränkeautomaten sowie einen Getränkeautomaten mit den Merkmalen der Hauptansprüche gelöst. Gegenstand des vorliegenden Ansatzes ist auch ein Computerprogramm. Vorteilhafte Ausgestaltungen und Weiterbildungen des Ansatzes ergeben sich aus den nachfolgenden Unteransprüchen.

Der Getränkeautomat, beispielsweise ein Kaffeevollautomat, soll in der Lage sein, für jedes ausgewählte Getränk die optimale Befüllposition des Auslaufs zu finden, über den das gewünschte Getränk in das Gefäß abgegeben wird. Dabei soll berücksichtigt werden, dass unterschiedliche Getränke und Gefäße existieren. Die mit dem hier vorgestellten Ansatz erreichbaren Vorteile bestehen insbesondere in der Realisierung einer an das jeweilige Getränk angepassten automatischen Höhenverstellung des Auslaufs.

Um dies zu erreichen, umfasst das Verfahren zur automatischen Höhenverstellung eines Auslaufs eines Getränkeautomaten folgende Schritte:
Einlesen eines Eingabesignals, das eine Auswahl eines Getränkes anzeigt;
Bereitstellen eines Absenksignals zum Absenken des Auslaufs ansprechend auf das Einlesen des Eingabesignals;
Einstellen des Auslaufs in eine der getätigten Auswahl des Getränks zugeordneten Befüllposition des Auslaufs, wobei die dem jeweiligen Getränk zugeordnete Befüllposition in einer Speichereinrichtung gespeichert ist.

Damit wird erreicht, dass der Auslauf bzw. eine an der Unterseite des Auslaufs angebrachte Schaltwippe nicht den Tassenrand berührt, wenn der Auslauf in die Befüllposition abgesenkt wird. Dadurch werden hygienische Aspekte verbessert, weil Verunreinigungen am Tassenrand nicht über den Auslauf auf andere Tassen übertragen werden. Das Erlernen der jeweils dem ausgewählten Getränk zugeordnete Befüllposition erfolgt auf folgende Art und Weise:
Einlesen eines Eingabesignals, das eine Auswahl eines Getränks anzeigt;
Bereitstellen eines Absenksignals zum Absenken des Auslaufs ansprechend auf das Einlesen des Eingabesignals;
Empfangen eines Kontaktsignals über eine Schnittstelle zu einem Kontaktsensor, wobei das Kontaktsignal einen Kontakt des Auslaufs mit einem Gefäß zum Aufnehmen des Getränks anzeigt;
Bereitstellen eines Anhebesignals zum Anheben des Auslaufs um eine Anhebestrecke ansprechend auf das Empfangen des Kontaktsignals, um eine Befüllposition des Auslaufs einzustellen; und
Ausgeben eines Speichersignals zum Speichern eines Befüllpositionswertes, der die dem Getränk zugeordnete Befüllposition repräsentiert, an eine Schnittstelle zu einer Speichereinrichtung, ansprechend auf das Empfangen des Kontaktsignals.

Bei dem Getränkeautomaten handelt es sich beispielsweise um einen Automaten zum Bereitstellen von Heißgetränken. Über den Auslauf können unterschiedliche von dem Getränkeautomaten bereitstellbare Getränke ausgegeben werden. Der Auslauf ist höhenverstellbar, um eine Position des Auslaufs an die Höhe unterschiedlicher Gefäße anpassen zu können. Dabei kann eine Höhenverstellung des Auslaufs automatisiert, beispielsweise unter Verwendung eines Motors erfolgen. Die Auswahl eines Getränks durch einen Nutzer des Getränkeautomaten kann beispielsweise über einen berührungsempfindlichen Sensor erkannt werden. Das Eingabesignal kann somit ein von einem Sensor ansprechend auf eine Nutzereingabe bereitgestelltes Signal repräsentieren, das die von dem Nutzer getätigte Auswahl des Getränks anzeigt. Das Eingabesignal kann von einem Steuergerät des Getränkeautomaten über eine geeignete Schnittstelle eingelesen werden. Das Absenksignal kann beispielsweise ein Steuersignal zum Steuern eines Motors sein, der geeignet ist, um den Auslauf zu bewegen. Der Kontaktsensor kann ausgebildet sein, um einen erfolgten oder unmittelbar bevorstehenden Kontakt zwischen dem Auslauf und dem Gefäß zu sensieren. Somit kann es sich bei dem Kontakt um einen bereits erfolgten oder unmittelbar bevorstehenden Kontakt handeln. Beispielsweise kann der Kontaktsensor als eine Wippe ausgeformt sein. Alternativ kann der Kontaktsensor zum berührungslosen Sensieren des erfolgten oder bevorstehenden Kontakts ausgebildet sein. Das Kontaktsignal kann ein von dem Kontaktsensor bereitgestelltes Signal repräsentieren das den erfolgten oder bevorstehenden Kontakt anzeigen kann. Das Anhebesignal kann ein weiteres Steuersignal zum Steuern des Motors sein. Die Anhebestrecke kann vorbestimmt sein, und einen für eine Getränkeausgabe optimalen Abstand zwischen dem Auslauf und einer Oberkante des Gefäßes definieren. Um die für das aktuelle Gefäß eingestellte Befüllposition für eine nachfolgende Auswahl desselben Getränks zu speichern, kann das Speichersignal zum Speichern des Befüllpositionswertes, welcher der gerade eingestellten Befüllposition entspricht, in der Speichereinrichtung gespeichert werden. Bei der Speichereinrichtung kann es sich beispielsweise um einen nichtflüchtigen Speicher handeln. Auf diese Weise kann bei einer erstmaligen Auswahl eines Getränks die für das Getränk geeignete Befüllposition erlernt und abgespeichert werden. Die nach dem Einlesen des Eingabesignals genannten Schritte können somit insbesondere für den Fall ausgeführt werden, dass für das ausgewählte Getränk noch kein Befüllpositionswert in der Speichereinrichtung gespeichert ist. Somit kann das Verfahren einen Schritt des Prüfens umfassen, in dem geprüft wird, ob ein einem ausgewählten Getränk zugeordneter Befüllpositionswert in der Speichereinrichtung gespeichert ist oder nicht und die genannten Schritte können für den Fall ausgeführt werden, dass ein Ergebnis des Prüfens ergibt, dass der zugeordnete Befüllpositionswert noch nicht in der Speichereinrichtung gespeichert ist.

Gemäß einer Ausführungsform kann das Verfahren somit einen Schritt des Prüfens umfassen, der ansprechend auf das Einlesen des Eingabesignals ausgeführt werden kann. In dem Schritt des Prüfens kann geprüft werden, ob der dem Getränk zugeordnete Befüllpositionswert in der Speichereinrichtung gespeichert ist. Wenn der Befüllpositionswert gespeichert ist, kann der Befüllpositionswert aus der Speichereinrichtung ausgelesen und zum direkten Einstellen der Höhe des Auslaufs verwendet werden. In diesem Fall kann in einem Schritt des Bereitstellens das Absenksignal unter Verwendung des Befüllpositionswertes zum Absenken des Auslaufs bis zu der Befüllposition ausgegeben werden. Dadurch wird der Auslauf automatisch auf die zuvor erlernte optimale Befüllposition für die gewählte Getränkesorte abgesenkt.

Die Schritte des Verfahrens können wiederholt ausgeführt werden, sodass nach und nach für unterschiedliche Getränke jeweils eine optimale Befüllposition erlernt und gespeichert werden kann.

So kann im Schritt des Einlesens ein weiteres Eingabesignal eingelesen werden, das eine Auswahl eines weiteren Getränks anzeigt. Im Schritt des Bereitstellens kann in diesem Fall das Absenksignal zum Absenken des Auslaufs ansprechend auf das Einlesen des weiteren Eingabesignals bereitgestellt und im Schritt des Empfangens das Kontaktsignal über eine Schnittstelle zu dem Kontaktsensor empfangen werden, wobei das Kontaktsignal einen Kontakt des Auslaufs mit einem weiteren Gefäß zum Aufnehmen des weiteren Getränks anzeigt. Im Schritt des Bereitstellens kann das Anhebesignal zum Anheben des Auslaufs um die Anhebestrecke ansprechend auf das Empfangen des Kontaktsignals bereitgestellt werden, um eine weitere Befüllposition des Auslaufs einzustellen. Das Speichersignal kann zum Speichern eines weiteren Befüllpositionswertes an die Schnittstelle zu der Speichereinrichtung ausgegeben werden, ausgegeben wird, ansprechend auf das Empfangen des Kontaktsignals wobei der weitere Positionswert die dem weiteren Getränk zugeordnete weitere Befüllposition repräsentiert. Vorteilhafterweise können somit für unterschiedliche Getränke unterschiedliche Befüllpositionen ermittelt und abgespeichert werden.

Entsprechend kann das Verfahren einen Schritt des Prüfens, ob der dem weiteren Getränk zugeordnete weitere Befüllpositionswert in der Speichereinrichtung gespeichert ist, umfassen, der ansprechend auf das Einlesen des weiteren Eingabesignals ausgeführt werden kann Dabei kann im Schritt des Bereitstellens unter Verwendung des weiteren Befüllpositionswertes das Absenksignal zum Absenken des Auslaufs bis zu der weiteren Befüllposition ausgegeben werden. Somit kann auch für das weitere Getränk ein bereits abgespeicherter Befüllpositionswert ausgelesen und zum Verfahren des Auslaufs in eine optimale Position verwendet werden.

Gemäß einer Ausführungsform umfasst das Eingabesignal eine Information über den das Getränk auswählenden Nutzer. Im Schritt des Ausgebens kann das Speichersignal zum Speichern des Befüllpositionswertes ausgegeben wird, der nun konkret die dem Getränk zugeordnete Befüllposition für den Nutzer anzeigen kann, der das Getränk ausgewählt hat. Damit kann die Information über den Nutzer verwendet werden, um die optimale Befüllposition nutzerspezifisch zu erlernen und zu speichern. Dies ist vorteilhaft, da unterschiedliche Nutzer gegebenenfalls unterschiedliche Gefäße für das gleiche Getränk verwenden.

Das Verfahren kann einen Schritt des Bereitstellens eines Befüllsignals zum Befüllen des Gefäßes mit dem Getränk umfassen, wenn die Befüllposition des Auslaufs eingestellt ist. Somit erhält der Nutzer sein gewünschtes Getränk.

Das Verfahren kann einen Schritt des Bereitstellens eines Rückstellsignals zum Rückstellen des Auslaufs in eine Ruheposition umfassen, wenn das Gefäß mit dem Getränk befüllt ist. Somit wird dem Nutzer die Entnahme des Gefäßes erleichtert.

Dieses Verfahren kann beispielsweise in Software oder Hardware oder in einer Mischform aus Software und Hardware beispielsweise in einem Steuergerät implementiert sein. Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Der hier vorgestellte Ansatz schafft ferner eine Vorrichtung, die ausgebildet ist, um die Schritte des Verfahrens in entsprechenden Einrichtungen auszuführen. Auch durch diese Ausführungsvariante des Ansatzes in Form einer Vorrichtung kann die dem Ansatz zugrundeliegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein entsprechender Getränkeautomat weist eine genannte Vorrichtung, den Kontaktsensor und die Speichereinrichtung auf. Durch die Vorrichtung kann die Bedienung des Getränkeautomaten verbessert werden.

Auch wenn der beschriebene Ansatz anhand eines Haushaltgeräts beschrieben wird, kann die hier beschriebe Vorrichtung/Verfahren entsprechend im Zusammenhang mit einem gewerblichen oder professionellen Gerät, beispielsweise in einem Bistro eingesetzt werden. Ausführungsbeispiele des Ansatzes sind in den Zeichnungen rein schematisch dargestellt und werden nachfolgend näher beschrieben. Es zeigt
- Figur 1: eine perspektivische Darstellung eines Getränkeautomaten gemäß einem Ausführungsbeispiel;
- Figuren 2 bis 5: schematische Darstellungen eines Getränkeautomaten gemäß einem Ausführungsbeispiel;
- Figur 6: eine schematische Darstellung eines Verfahrens gemäß einem Ausführungsbeispiel;
- Figur 7: eine schematische Darstellung eines Getränkeautomaten gemäß einem Ausführungsbeispiel; und
- Figur 8: ein Ablaufdiagramm eines Verfahrens zum automatischen Höhenverstellen eines Auslaufs eines Getränkeautomaten

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

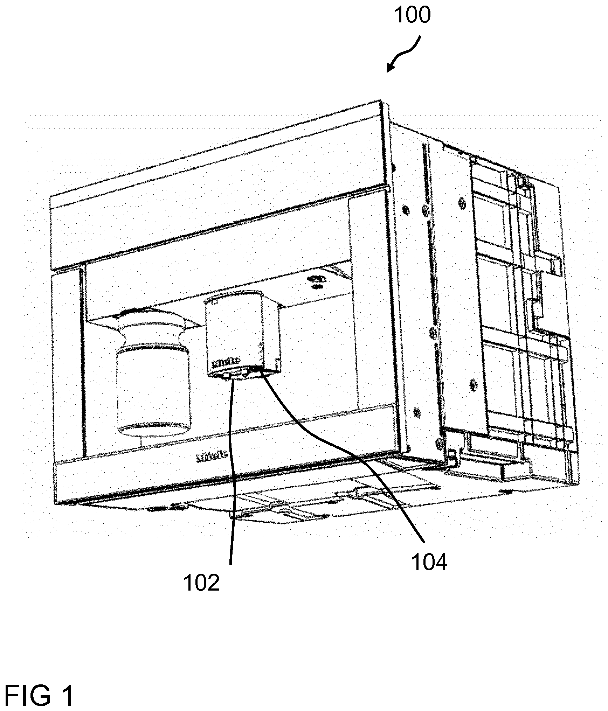

Figur 1 zeigt eine perspektivische Darstellung eines Getränkeautomaten 100 gemäß einem Ausführungsbeispiel. Bei dem Getränkeautomaten 100 kann es sich beispielsweise um einen handelsüblichen Kaffeevollautomaten handeln. Lediglich beispielhaft ist der Getränkeautomaten 100 als ein Einbaugerät dargestellt, das beispielsweise in eine Küchenzeile integriert werden kann.

Der Getränkeautomaten 100 weist auf seiner für einen Nutzer zugänglichen Vorderseite in etwa mittig einen Auslauf 102 auf, über den ein vom Nutzer ausgewähltes Getränk ausgegeben werden kann. Der Auslauf 102 verfügt gemäß einem Ausführungsbeispiel über einen Kontaktsensor 104 zur Erkennung einer Kollision mit einem Gefäßrand eines unter dem Auslauf 102 platzierbaren Gefäßes zur Aufnahme des Getränks. Der Kontaktsensor 104 ist beispielsweise als ein Schalter ausgeführt. Alternativ kann der Kontaktsensor 104 auch an einer anderen Position des Getränkeautomaten 100 angeordnet sein.

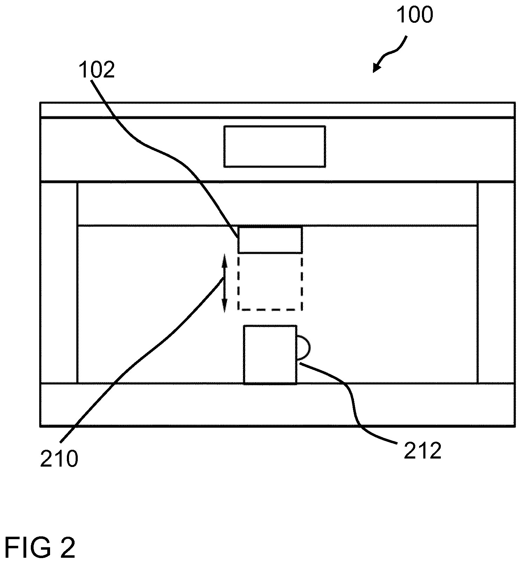

Figur 2 zeigt eine schematische Darstellung eines Getränkeautomaten 100 gemäß einem Ausführungsbeispiel, beispielsweise des anhand von Figur 1 beschriebenen Getränkeautomaten 100. Auch hier weist der Getränkeautomat 100 einen verfahrbaren Auslauf 102 auf. Der Auslauf 102 ist im betriebsbereiten Zustand des Getränkeautomaten 100 motorisch anhebbar und absenkbar. Die möglichen Bewegungsrichtungen, die durch einen Doppelpfeil 210 gekennzeichnet sind, entsprechen dabei beispielsweise der Fließrichtung eines Getränkes, das über den Auslauf 102 ausgegeben wird. Gemäß einem Ausführungsbeispiel steht im betriebsbereiten Zustand ein Gefäß 212 zum Auffangen des Getränks unter dem Auslauf 102, beispielsweise eine Tasse.

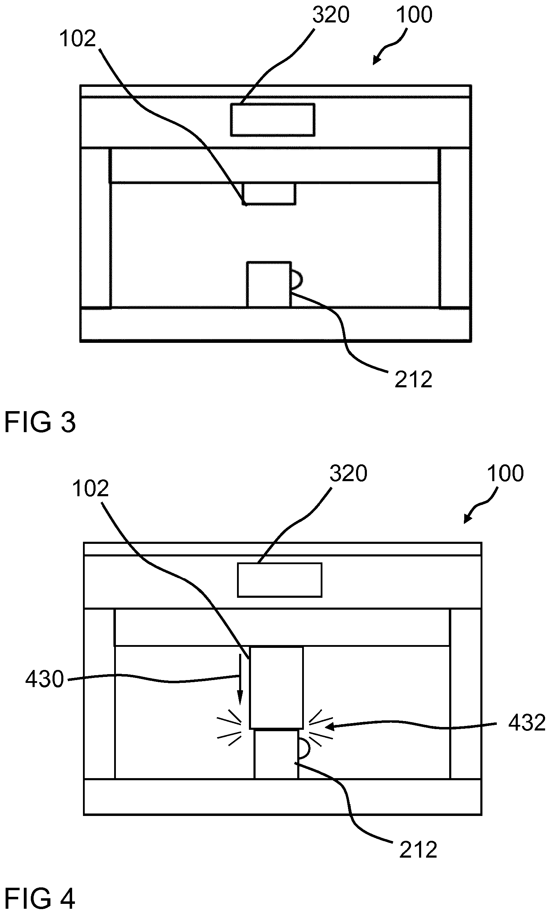

Anhand der folgenden Figuren 3 bis 5 wird eine Funktionsweise des anhand von Figur 2 gezeigten Getränkeautomaten 100 näher beschrieben.

Figur 3 zeigt eine schematische Darstellung des anhand von Figur 2 beschriebenen Getränkeautomaten 100 gemäß einem Ausführungsbeispiel. Der Auslauf 102 befindet sich in einer Ruheposition. Dabei ist der Auslauf 102 beispielsweise bis zu einem Anschlag nach oben verfahren. Der Nutzer hat bereits das Gefäß 212 unter den Auslauf 102 gestellt und wählt beispielsweise über ein berührungsempfindliches Display 320 oder über eine Eingabetaste oder sprachgesteuert ein Getränk aus.

Figur 4 zeigt eine schematische Darstellung des anhand von Figur 3 beschriebenen Getränkeautomaten 100 gemäß einem Ausführungsbeispiel. Durch eine Getränkeauswahl eines Nutzers, beispielsweise über das Display 320, wie es anhand von Figur 3 beschrieben ist, wird das Absenken 430 des Auslaufs 102 veranlasst. Der Auslauf 102 fährt so lange nach unten in Richtung des Gefäßes 212 herab, bis der Auslauf 102 den Gefäßrand des Gefäßes 212 berührt. In Figur 4 ist eine Situation gezeigt, in der sich der Auslauf 102 in einer Kontaktposition 432 mit dem Gefäß 212 befindet. Der Kontakt zwischen Gefäß 212 und Auslauf 102 wird beispielsweise unter Verwendung eines Kontaktsensors sensiert, wie er anhand von Figur 1 beschrieben ist.

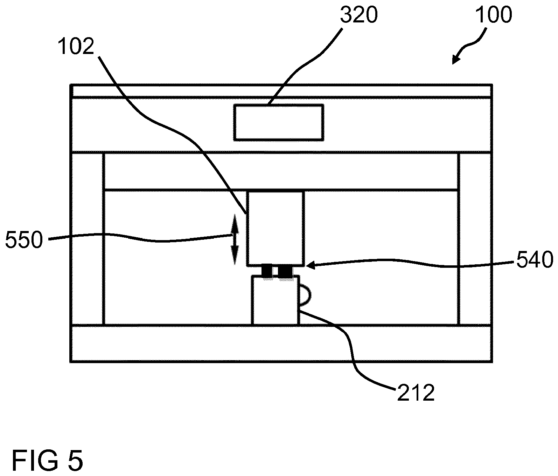

Figur 5 zeigt eine schematische Darstellung des anhand von Figur 4 beschriebenen Getränkeautomaten 100 gemäß einem Ausführungsbeispiel, wobei sich der Auslauf 102 in einer optimalen Befüllposition 540 befindet. Die optimale Befüllposition wurde dadurch erreicht, dass der Auslauf 102 nach dem Kontakt mit dem Gefäß 212, wie auch in Figur 4 beschrieben, um eine Anhebestrecke 550 hinauffährt, also von dem Gefäß 212 weg, bis die optimale Befüllposition 540 erreicht ist. Gemäß einem Ausführungsbeispiel ist die Anhebestrecke 550 ein fest vorgegebener Wert. Alternativ können für unterschiedliche Kontaktpositionen zwischen Auslauf 102 und Gefäß 212 unterschiedliche Anhebestrecken vorgegeben sein oder bestimmt werden.

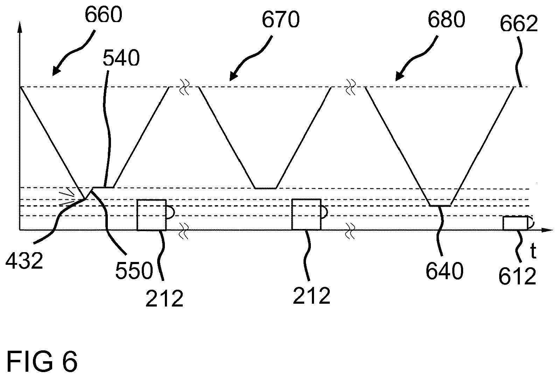

Figur 6 zeigt eine schematische Darstellung unterschiedlicher Verfahrwege 660, 670, 680 eines Auslaufs eines Getränkeautomaten 100, wie er anhand der vorangegangenen Figuren beschrieben ist, gemäß einem Ausführungsbeispiel. Auf der Abszisse ist die Zeit t und auf der Ordinate die Positionen des Auslaufs aufgetragen.

Ein erster Verfahrweg 660 ist für eine Situation gezeigt, in der ein Gefäß 212 unter den Auslauf 102 gestellt wird, für das noch keine Befüllposition 540 gespeichert ist. In diesem Fall wird der Auslauf nach Auswahl eines Getränks durch einen Nutzer ausgehend von einer Ruheposition 662 solange abgesenkt, bis der Auslauf das Gefäß 212 berührt, hier bei einer Kontaktposition 432. Anschließend wird der Auslauf um eine Anhebestrecke 550 bis zu der für dieses Gefäß 212 optimalen Befüllposition 540 angehoben. Nach Abschluss des Befüllens des Gefäßes 212 fährt der Auslauf 102 in die Ruheposition 662 zurück. Die für dieses Gefäß 212 oder für das ausgewählte Getränk ermittelte Befüllposition 540 wird gespeichert.

In Figur 6 ist ebenfalls ein zweiter Verfahrweg 670 für eine Situation gezeigt, in der das Gefäß 212 erneut unter den Auslauf gestellt wird, beispielsweise weil der Nutzer dasselbe Getränk auswählen möchte, ansprechend auf dessen vorangegangene Auswahl über den Verfahrweg 660 die optimale Befüllposition 540 für dieses Getränk bzw. für dieses Gefäß 212 ermittelt wurde. Für das Gefäß 212 bzw. für dieses Getränk ist bereits eine Befüllposition 540 gespeichert. In diesem Fall wird der Auslauf ausgehend von der Ruheposition 662 solange abgesenkt, bis die optimale Befüllposition 540 erreicht ist. An der optimalen Befüllposition 540 wird der Auslauf gestoppt und das Getränk wird in das Gefäß 212 ausgegeben. Nach Abschluss des Befüllens des Gefäßes 212 fährt der Auslauf 102 in die Ruheposition 662 zurück.

Ein dritter Verfahrweg 680 ist für eine Situation gezeigt, in der ein weiteres Gefäß 612 unter den Auslauf 102 gestellt wird, für das bereits eine weitere optimale Befüllposition 640 gespeichert ist. In diesem Fall wird der Auslauf ausgehend von der Ruheposition 662 solange abgesenkt, bis die weitere optimale Befüllposition 640 erreicht ist. An der weiteren optimalen Befüllposition 640 wird der Auslauf gestoppt und das Getränk wird in das weitere Gefäß 612 ausgegeben. Nach Abschluss des Befüllens des weiteren Gefäßes 612 fährt der Auslauf in die Ruheposition 662 zurück.

Die gemäß einem Ausführungsbeispiel beschriebenen zeitlichen Verläufe der Absenkung des Auslaufs in Form der Verfahrwege 660, 670, 680 wird im Folgenden nochmals beschrieben.

Der erste Verfahrweg 660 weist als Verläufe ein Absenken des Auslaufs aus der Ruheposition 662 bis zur Kollision mit dem Gefäßrand, ein Anheben des Auslaufs in die optimale Befüllposition 540 und eine Befüllung des Gefäßes 212 und ein Anheben des Auslaufs nach Befüllung in die Ruheposition 662 auf.

Der zweite Verfahrweg 670 weist als Verläufe ein direktes Absenken des Auslaufs in die optimale, erlernte Befüllposition 540 für das gewählte Benutzerprofil und die gewählte Getränkesorte, hier orientiert an der Gefäßhöhe und Befüllung, und ein Anheben des Auslaufs nach Befüllung in die Ruheposition 662 auf.

Der dritte Verfahrweg 680 weist als Verläufe ein direktes Absenken des Auslaufs in die optimale, erlernte Befüllposition 640 für das gewählte Benutzerprofil und die gewählte Getränkesorte, hier orientiert an der Gefäßhöhe und Befüllung, und ein Anheben des Auslaufs nach Befüllung in die Ruheposition 662 auf.

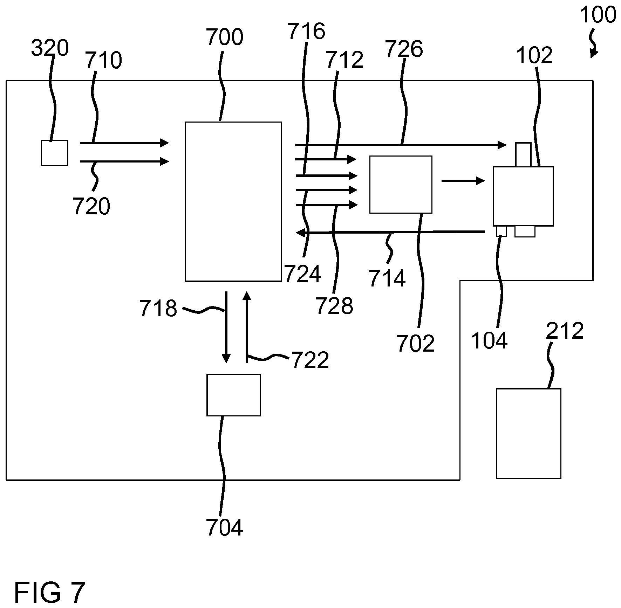

Figur 7 zeigt eine schematische Darstellung eines Getränkeautomaten 100 gemäß einem Ausführungsbeispiel, beispielsweise des anhand von Figur 1 beschriebenen Getränkeautomaten 100.

Der Getränkeautomat 100 weist wie bereits beschrieben einen Auslauf 102 mit einem Kontaktsensor 104 sowie stellvertretend für einen Sensor zum Erfassen einer Nutzereingabe ein berührungsempfindliches Display 320 auf.

Der Getränkeautomat 100 weist eine Vorrichtung 700 zur automatischen Höhenverstellung des Auslaufs 102 auf. Ferner weist der Getränkeautomat 100 einen Motor 702 zum Verfahren des Auslaufs 102 und eine Speichereinrichtung 704 auf.

Das Display 320 ist ausgebildet, um ausgelöst durch die Eingabe eines Nutzers, ein Eingabesignal 710 auszugeben. Das Eingabesignal 710 überträgt eine Information über ein von einem Nutzer ausgewählten Getränks. Optional überträgt das Eingabesignal 710 eine Information über den Nutzer. Dies kann beispielsweise dann der Fall sein, wenn der Getränkeautomat 100 dem Nutzer die Möglichkeit der Einrichtung eines persönlichen Profils bietet. Die Vorrichtung ist ausgebildet, um das Eingabesignal 710 über eine Schnittstelle einzulesen und unter Verwendung des Eingabesignals 710 ein Absenksignal 712 an den Motor 702 bereitzustellen. Der Motor ist ausgebildet, um unter Verwendung des Absenksignals 712 das Absenken des Auslaufs 102 zu bewirken.

Der Kontaktsensor 104 ist ausgebildet, um einen erfolgten oder unmittelbar bevorstehenden Kontakt zwischen dem Auslauf 102 und einem unter dem Auslauf 102 abgestellten Gefäß 212 zu sensieren und ansprechend auf einen sensierten erfolgten oder unmittelbar bevorstehenden Kontakt ein Kontaktsignal 714 bereitzustellen. Die Vorrichtung 700 ist ausgebildet, um das Kontaktsignal 714 über eine Schnittstelle einzulesen und unter Verwendung des Kontaktsignals 714 ein Anhebesignal 716 an den Motor 702 bereitzustellen. Der Motor 702 ist ausgebildet, um unter Verwendung des Anhebesignals 716 das Anheben des Auslaufs 102 um eine Anhebestrecke zu bewirken, um eine Befüllposition des Auslaufs 102 einzustellen.

Die Vorrichtung 700 ist ausgebildet, um daraufhin ein Speichersignal 718 zum Speichern eines Befüllpositionswertes an eine Schnittstelle zu einer Speichereinrichtung 704 bereitzustellen. Die Speichereinrichtung 704 ist ausgebildet, um einen durch das Speichersignal 718 übertragenen Befüllpositionswert zu speichern, der die dem Getränk zugeordnete Befüllposition repräsentiert. Optional ist der Befüllpositionswert nicht nur dem Getränk sondern zusätzlich auch dem Nutzer zugeordnet, der das Getränk ausgewählt hat.

Nach dem Erreichen der optimalen Befüllposition des Auslaufs 102 stellt die Vorrichtung 700 ein Befüllsignal 726 bereit, wodurch das Gefäß 212 mit dem Getränk befüllt wird. Die Vorrichtung 700 ist ausgebildet, um das Befüllsignal 726 über eine Schnittstelle an den Auslauf 102 oder an eine Bereitstellungseinrichtung zum Bereitstellen des Getränks bereitzustellen.

Wenn das Gefäß 212 mit dem Getränk befüllt ist, stellt die Vorrichtung 700 ein Rückstellsignal 728 an den Motor 702 bereit, um ein Rückstellen des Auslaufs 102 in eine Ruheposition zu bewirken. Der Motor 702 ist demnach ausgebildet, um unter Verwendung des Rückstellsignals 728 den Auslauf 102 solange zu verfahren, bis die Ruheposition des Auslaufs 102 erreicht ist.

Die erneute Eingabe des Nutzers für das gleiche Getränk über das Display 320 löst eine erneute Ausgabe des Eingabesignals 710 aus, welches von der Vorrichtung 700 eingelesen wird. Die Vorrichtung 700 ist ausgebildet, um zu prüfen, ob für das Getränk, das durch das Eingabesignal 710 angezeigt wird, bereits eine Befüllposition ermittelt wurde und ein der Befüllposition entsprechender Befüllpositionswert in der Speichereinrichtung 704 gespeichert ist. Optional ist die Vorrichtung 700 ausgebildet, um zu prüfen, ob für das Getränk bereits eine nutzerspezifische Befüllposition ermittelt wurde und ein der nutzerspezifischen Befüllposition entsprechender Befüllpositionswert in der Speichereinrichtung 704 gespeichert ist. Wenn ein entsprechender Befüllpositionswert in der Speichereinrichtung 704 gespeichert ist, ist die Vorrichtung 700 ausgebildet, diesen Befüllpositionswert aus der Speichereinrichtung 704 auszulesen und zum direkten Verfahren des Auslaufs in die Befüllposition zu verwenden. In diesem Fall ist die Speichereinrichtung 704 beispielsweise ausgebildet, um den bereits gespeicherten Befüllpositionswert unter Verwendung eines Positionssignals 722 an die Vorrichtung 700 auszugeben. Die Vorrichtung 700 ist ausgebildet, um das Positionssignal 722 über eine Schnittstelle einzulesen und unter Verwendung des Positionssignals 722 ein weiteres Absenksignal 724 an den Motor 702 bereitzustellen. Der Motor 702 ist ausgebildet, um unter Verwendung des weiteren Absenksignals 724 das Absenken des Auslaufs 102 zu bewirken, bis die durch den Befüllpositionswert definierte optimale Befüllposition erreicht ist.

Wenn das Gefäß 212 mit dem Getränk befüllt ist, stellt die Vorrichtung 700 erneut das Rückstellsignal 728 an den Motor 702 bereit, um das Rückstellen des Auslaufs 102 in die Ruheposition zu bewirken.

Eine erneute Eingabe des Nutzers zum Auswählen eines weiteren Getränks über das Display 320 löst ein weiteres Eingabesignal 720 aus, welches von der Vorrichtung 700 eingelesen wird. Das weitere Getränk unterscheidet sich von seiner Art her von dem zuvor beschriebenen Getränk, sodass erwartungsgemäß von dem Nutzer ein anderes Gefäß verwendet wird, für das eine andere Befüllposition sinnvoll ist.

Die Vorrichtung 700 ist ausgebildet, um ansprechend auf das Einlesen des weiteren Eingabesignals 720 über die Schnittstelle zu prüfen, ob für das weitere Getränk bereits eine optimale Befüllposition erlernt und ein entsprechender weiterer Befüllpositionswert in der Speichereinrichtung 704 gespeichert ist. Wenn noch kein dem weiteren Getränk zugeordneter weiterer Befüllpositionswert abgespeichert ist, ist die Vorrichtung 700 ausgebildet, um die weitere optimale Befüllposition wie bereits beschrieben zu erlernen und den der die weiteren optimalen Befüllposition zugeordneten Befüllpositionswert in der Speichereinrichtung 704 abzuspeichern. Wenn dagegen der dem weiteren Getränk zugeordnete weiterer Befüllpositionswert bereits abgespeichert ist, ist die Vorrichtung 700 ausgebildet, um ein direktes Anfahren der weiteren optimalen Befüllposition zu bewirken, wie es bereits beschrieben wurde.

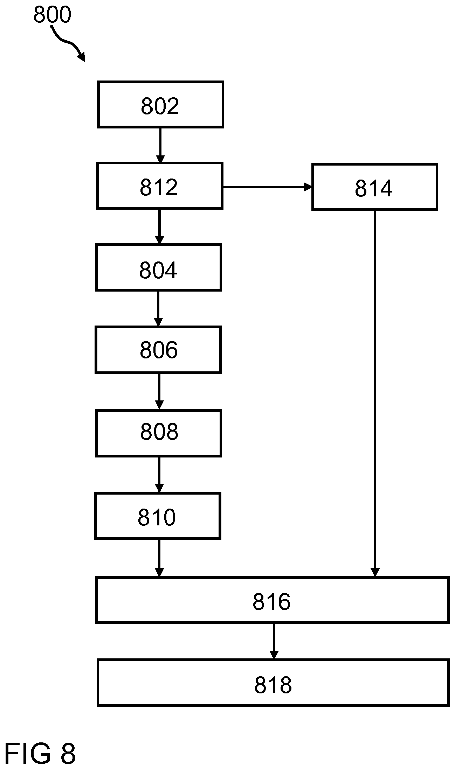

Figur 8 zeigt ein Ablaufdiagramm eines Verfahrens 800 zum automatischen Höhenverstellen eines Auslaufs eines Getränkeautomaten gemäß einem Ausführungsbeispiel. Das Verfahren 800 kann beispielsweise im Zusammenhang mit einem Getränkeautomaten ausgeführt werden, wie er anhand der vorangegangenen Figuren beschrieben ist.

In einem Schritt 802 wird, beispielsweise ausgelöst durch die Eingabe eines Nutzers, beispielsweise über ein Display, ein Eingabesignal eingelesen, das eine Auswahl eines Getränks anzeigt. Daraufhin wird in einem Schritt 804 ein Absenksignal bereitgestellt, welches das Absenken des Auslaufs veranlasst. In einem Schritt 806 wird ein Kontaktsignal empfangen, welches durch einen Kontakt des Auslaufs mit einem Gefäß zum Aufnehmen des Getränks ausgelöst wird, beispielsweise unter Verwendung eines Kontaktsensors. In einem Schritt 808 wird ein Anhebesignal bereitgestellt, welches ein stückweises Anheben des Auslaufs veranlasst, um eine optimale Befüllposition des Auslaufs einzustellen. In einem Schritt 810 wird das Ausgeben eines Speichersignals zum Speichern eines Befüllpositionswertes an eine Schnittstelle zu einer Speichereinrichtung veranlasst, wobei der Befüllpositionswert die dem Getränk zugeordnete Befüllposition repräsentiert.

Gemäß einem Ausführungsbeispiel wird in einem Schritt 812 nach dem Schritt 802 überprüft, ob bereits ein dem Getränk zugeordneter Befüllpositionswert in der Speichereinrichtung abgespeichert wurde. Wenn der Befüllpositionswert bereits in der Speichereinrichtung gespeichert ist, wird der Befüllpositionswert aus der Speichereinrichtung ausgelesen und in einem Schritt 814 verwendet, um den Auslauf direkt bis zu der durch den Befüllpositionswert definierten Befüllposition abzusenken. In diesem Fall werden die Schritte 804, 806, 808, 810 gemäß einem Ausführungsbeispiel nicht ausgeführt, da der Auslauf direkt durch Ausführung des Schritts 814 in die optimale Befüllposition verfahren wird und eine erneute Abspeicherung des die optimale Befüllposition repräsentierenden Befüllpositionswerts nicht erforderlich ist. Findet während des Ausführens des Schritts 814 jedoch ein Kontakt zwischen Auslauf und Gefäß statt, so können die Schritte 806, 808 ausgeführt werden, da vermutlich ein unerwartet hohes Gefäß verwendet wurde. Optional kann in diesem Fall ferner der Schritt 810 ausgeführt werden, um die Befüllposition zu aktualisieren. Beispielsweise kann der Schritt 810 immer ausgeführt werden, wenn ein Kontakt zwischen Auslauf und Gefäß angezeigt wurde oder nur dann ausgeführt werden, wenn der Kontakt zwischen Auslauf und Gefäß angezeigt wurde und die dadurch angezeigte Gefäßhöhe für das ausgewählte Getränk plausibel erscheint.

In einem Schritt 816 wird ein Befüllsignal bereitgestellt, welches das Befüllen des Gefäßes mit dem Getränk veranlasst, wenn die Befüllposition des Auslaufs erreicht ist. In einem Schritt 818 wird ein Rückstellsignal zum Rückstellen des Auslaufs in die Ruheposition bereitgestellt, wenn das Gefäß mit dem Getränk befüllt ist.

Insbesondere der Schritt 810 kann in einer von der gezeigten Darstellung abweichenden Reihenfolge ausgeführt werden, beispielsweise während oder vor dem Schritt 808 oder während, vor oder nach einem der Schritte 816, 818.

Als Fazit ergibt sich folgender Bewegungsablauf des Auslaufs für das Erlernen der Befüllposition:
- Absenken des Auslaufs aus der Ruheposition bis zur Kollision mit demTassenrand
- Anheben des Auslaufs in die optimale Befüllposition und Befüllung der Tasse
- Anheben des Auslaufs nach Befüllung in die Ruheposition

Für den normalen Betrieb stellt sich folgender Bewegungsablauf ein:
- Direktes Absenken des Auslaufs in die optimale, erlernte Befüllposition für das gewählte Benutzerprofil und die gewählte Getränkesorte, hier orientiert an Tassenhöhe und Befüllung
- Anheben des Auslaufs nach Befüllung in die Ruheposition

Um weitere Anpassungen bereitzustellen, ist es in einer vorteilhaften Ausführung vorgesehen, dass nach dem Absenken des Auslaufs auf die erlernte Befüllposition ein weiterer manueller Eingriff möglich ist. Dazu kann der Benutzer mittels einer Bedieneingabe das Absenken des Auslaufs zu aktivieren, bis die Kollision auf den Tassenrand erfasst wird. Das kann sinnvoll sein, wenn eine niedrigere Tasse verwendet wird, die eine geringere Hähe aufweist, als die im Speicher abgelegte Tassenhöhe bzw. Befüllposition.

## Patentansprüche

1. Verfahren (800) zur automatischen Höhenverstellung eines Auslaufs (102) eines Getränkeautomaten (100), wobei das Verfahren (800) die folgenden Schritte umfasst:
Einlesen (802) eines Eingabesignals (710), das eine Auswahl eines Getränkes anzeigt;
Bereitstellen (804) eines Absenksignals (712) zum Absenken des Auslaufs (102) ansprechend auf das Einlesen des Eingabesignals (710);
entweder
Einstellen des Auslaufs (102) in eine der getätigten Auswahl des Getränks zugeordneten Befüllposition (540) des Auslaufs (102), wobei die dem jeweiligen Getränk zugeordnete Befüllposition (540) in einer Speichereinrichtung (704) gespeichert ist, wenn kein Kontakt zwischen Auslauf (102) und Gefäß (212) stattfindet;
oder
Empfangen (806) eines Kontaktsignals (714) über eine Schnittstelle zu einem Kontaktsensor (104), wobei das Kontaktsignal (714) einen Kontakt des Auslaufs (102) mit einem Gefäß (212) zum Aufnehmen des Getränks anzeigt;
Bereitstellen (808) eines Anhebesignals (716) zum Anheben des Auslaufs (102) um eine Anhebestrecke (550) ansprechend auf das Empfangen des Kontaktsignals (714), um eine Befüllposition (540) des Auslaufs (102) einzustellen; und
Ausgeben (810) eines Speichersignals (718) zum Speichern eines Befüllpositionswertes, der die dem Getränk zugeordnete Befüllposition (540) repräsentiert, an eine Schnittstelle zu einer Speichereinrichtung (704), ansprechend auf das Empfangen des Kontaktsignals (714).

2. Verfahren gemäß Anspruch 1, mit einem Schritt (812) des Prüfens, ob der dem Getränk zugeordnete Befüllpositionswert in der Speichereinrichtung (704) gespeichert ist, ansprechend auf das Einlesen des Eingabesignals (710), wobei in einem Schritt (814) des Bereitstellens unter Verwendung des Befüllpositionswertes das Absenksignal (712) zum Absenken des Auslaufs (102) bis zu der Befüllposition (540) ausgegeben wird.

3. Verfahren gemäß einem der der vorangegangenen Ansprüche, bei dem im Schritt (802) des Einlesens ein weiteres Eingabesignal (720) eingelesen wird, das eine Auswahl eines weiteren Getränks anzeigt, im Schritt (804) des Bereitstellens das Absenksignal (712) zum Absenken des Auslaufs (102) ansprechend auf das Einlesen des weiteren Eingabesignals (720) bereitgestellt wird, im Schritt (806) des Empfangens das Kontaktsignal (714) über eine Schnittstelle zu dem Kontaktsensor (104) empfangen wird, wobei das Kontaktsignal (714) einen Kontakt des Auslaufs (102) mit einem weiteren Gefäß (612) zum Aufnehmen des weiteren Getränks anzeigt, im Schritt (808) des Bereitstellens das Anhebesignal (716) zum Anheben des Auslaufs (102) um die Anhebestrecke (550) ansprechend auf das Empfangen des Kontaktsignals (714) bereitgestellt wird, um eine weitere Befüllposition (640) des Auslaufs (102) einzustellen, und im Schritt (810) des Ausgebens das Speichersignal (718) zum Speichern eines weiteren Befüllpositionswertes, der die dem weiteren Getränk zugeordnete weitere Befüllposition (640) repräsentiert, an die Schnittstelle zu der Speichereinrichtung (704) ausgegeben wird, ansprechend auf das Empfangen des Kontaktsignals (714).

4. Verfahren gemäß Anspruch 3, mit einem Schritt (812) des Prüfens, ob der dem weiteren Getränk zugeordnete weitere Befüllpositionswert in der Speichereinrichtung (704) gespeichert ist, ansprechend auf das Einlesen des weiteren Eingabesignals (720), wobei im Schritt (814) des Bereitstellens unter Verwendung des weiteren Befüllpositionswertes das Absenksignal (712) zum Absenken des Auslaufs (102) bis zu der weiteren Befüllposition (640) ausgegeben wird.

5. Verfahren gemäß einem der der vorangegangenen Ansprüche, bei dem im Schritt des Einlesens (802) das Eingabesignal (710) eine Information über einen das Getränk auswählenden Nutzer anzeigt und im Schritt des Ausgebens (810) das Speichersignal (718) zum Speichern des Befüllpositionswertes ausgegeben wird, der die dem Getränk zugeordnete Befüllposition (540) für den Nutzer anzeigt.

6. Verfahren gemäß einem der vorangegangenen Ansprüche, mit einem Schritt (816) des Bereitstellens eines Befüllsignals (726) zum Befüllen des Gefäßes (212; 612) mit dem Getränk, wenn die Befüllposition (540; 640) des Auslaufs (102) eingestellt ist.

7. Verfahren gemäß Anspruch 6, mit einem Schritt (818) des Bereitstellens eines Rückstellsignals (728) zum Rückstellen des Auslaufs (102) in eine Ruheposition (662), wenn das Gefäß (212; 612) mit dem Getränk befüllt ist.

8. Vorrichtung (700), die ausgebildet ist, um die Schritte des Verfahrens (800) gemäß einem der Ansprüche 1 bis 7 in entsprechenden Einrichtungen der Vorrichtung auszuführen.

9. Computer-Programmprodukt mit Programmcode zur Durchführung des Verfahrens nach einem der Ansprüche 1 bis 7, wenn das Computer-Programmprodukt auf einer Vorrichtung gemäß Anspruch 8 ausgeführt wird.

10. Getränkeautomat (100) mit einer Vorrichtung (700) gemäß Anspruch 8, dem Kontaktsensor (104) und der Speichereinrichtung (704).

## Claims

1. Method (800) for automatically adjusting the height of an outlet (102) of a beverage machine (100), wherein the method (800) comprises the following steps:
reading in (802) an input signal (710) which indicates a selection of a beverage;
providing (804) a lowering signal (712) to lower the outlet (102) in response to the reading in of the input signal (710);
either
setting the outlet (102) into a filling position (540) of the outlet (102), which position is associated with the selection made for the beverage, wherein the filling position (540) associated with the relevant beverage is stored in a memory device (704) when no contact occurs between the outlet (102) and the vessel (212);
or
receiving (806) a contact signal (714) via an interface to a contact sensor (104), wherein the contact signal (714) indicates contact between the outlet (102) and a vessel (212) for receiving the beverage;
providing (808) a raising signal (716) to raise the outlet (102) by a raising distance (550) in response to receiving the contact signal (714) in order to set a filling position (540) of the outlet (102); and
outputting (810) a memory signal (718) to store a filling position value which represents the filling position (540) associated with the beverage at an interface to a memory device (704) in response to receiving the contact signal (714).

2. Method according to claim 1, comprising a step (812) of checking whether the filling position value associated with the beverage is stored in the memory device (704) in response to the reading in of the input signal (710), wherein, in a provision step (814), using the filling position value, the lowering signal (712) is output in order to lower the outlet (102) until it reaches the filling position (540).

3. Method according to any of the preceding claims, wherein, in the reading-in step (802), a further input signal (720) is read in, which signal indicates a selection of a further beverage; in the provision step (804), the lowering signal (712) is provided to lower the outlet (102) in response to the reading in of the further input signal (720); in the receiving step (806), the contact signal (714) is received via an interface to the contact sensor (104), wherein the contact signal (714) indicates contact between the outlet (102) and a further vessel (612) for receiving the further beverage; in the provision step (808), the raising signal (716) is provided to raise the outlet (102) by the raising distance (550) in response to receiving the contact signal (714) in order to set a further filling position (640) of the outlet (102); and in the outputting step (810), the memory signal (718) for storing a further filling position value, which value represents the further filling position (640) associated with the further beverage, is output at the interface to the memory device (704) in response to receiving the contact signal (714).

4. Method according to claim 3, comprising a step (812) of checking whether the further filling position value associated with the further beverage is stored in the memory device (704) in response to the reading in of the further input signal (720), wherein, in the provision step (814), using the further filling position value, the lowering signal (712) is output to lower the outlet (102) until it reaches the further filling position (640).

5. Method according to any of the preceding claims, wherein, in the reading-in step (802), the input signal (710) indicates information about a user selecting the beverage, and in the outputting step (810), the memory signal (718) is output in order to store the filling position value, which indicates the filling position (540) associated with the beverage for the user.

6. Method according to any of the preceding claims, comprising a step (816) of providing a filling signal (726) for filling the vessel (212; 612) with the beverage when the filling position (540; 640) of the outlet (102) is set.

7. Method according to claim 6, comprising a step (818) of providing a reset signal (728) to reset the outlet (102) to a rest position (662) when the vessel (212; 612) is filled with the beverage.

8. Apparatus (700) which is configured to execute the steps of the method (800) according to any of claims 1 to 7 in corresponding devices of the apparatus.

9. Computer program product comprising program code for carrying out the method according to any of claims 1 to 7 when the computer program product is run on an apparatus according to claim 8.

10. Beverage machine (100) comprising an apparatus (700) according to claim 8, the contact sensor (104) and the memory device (704).

## Revendications

1. Procédé (800) permettant de régler automatiquement en hauteur une sortie (102) d'un distributeur automatique de boissons (100), le procédé (800) comprenant les étapes suivantes :
lecture (802) d'un signal d'entrée (710) qui indique une sélection d'une boisson ;
fourniture (804) d'un signal d'abaissement (712) permettant d'abaisser la sortie (102) en réponse à la lecture du signal d'entrée (710) ;
soit
réglage de la sortie (102) dans une position de remplissage (540), associée à la sélection réalisée de la boisson, de la sortie (102), la position de remplissage (540) associée à la boisson respective étant enregistrée dans un appareil d'enregistrement (704) lorsqu'aucun contact n'existe entre la sortie (102) et le récipient (212) ;
soit
réception (806) d'un signal de contact (714) par l'intermédiaire d'une interface avec un capteur de contact (104), le signal de contact (714) indiquant un contact entre la sortie (102) et un récipient (212) permettant de recevoir la boisson ;
fourniture (808) d'un signal de levage (716) permettant de lever la sortie (102) sur une zone de levage (550) en réponse à la réception du signal de contact (714), afin de régler une position de remplissage (540) de la sortie (102) ; et
émission (810) d'un signal d'enregistrement (718) permettant d'enregistrer une valeur de position de remplissage, laquelle représente la position de remplissage (540) associée à la boisson, au niveau d'une interface avec un appareil d'enregistrement (704) en réponse à la réception du signal de contact (714).

2. Procédé selon la revendication 1, comportant une étape (812) de vérification du fait de savoir si la valeur de position de remplissage associée à la boisson est enregistrée ou non dans l'appareil d'enregistrement (704) en réponse à la lecture du signal d'entrée (710), le signal d'abaissement (712) permettant d'abaisser la sortie (102) jusqu'à la position de remplissage (540) étant émis dans une étape (814) de fourniture à l'aide de la valeur de position de remplissage.

3. Procédé selon l'une quelconque des revendications précédentes, dans lequel, dans l'étape (802) de lecture, un autre signal d'entrée (720) est lu, lequel indique une sélection d'une autre boisson, dans l'étape (804) de fourniture, le signal d'abaissement (712) permettant d'abaisser la sortie (102) est fourni en réponse à la lecture de l'autre signal d'entrée (720), dans l'étape (806) de réception, le signal de contact (714) est reçu par l'intermédiaire d'une interface avec le capteur de contact (104), le signal de contact (714) indiquant un contact entre la sortie (102) et un autre récipient (612) permettant de recevoir l'autre boisson, dans l'étape (808) de fourniture, le signal de levage (716) permettant de lever la sortie (102) sur la zone de levage (550) est fourni en réponse à la réception du signal de contact (714) afin de régler une autre position de remplissage (640) de la sortie (102) et, dans l'étape (810) d'émission, le signal d'enregistrement (718) permettant d'enregistrer une autre valeur de position de remplissage, laquelle représente l'autre position de remplissage (640) associée à l'autre boisson, est émis au niveau de l'interface avec l'appareil d'enregistrement (704) en réponse à la réception du signal de contact (714).

4. Procédé selon la revendication 3, comportant une étape (812) de vérification du fait de savoir si l'autre valeur de position de remplissage associée à l'autre boisson est enregistrée ou non dans l'appareil d'enregistrement (704) en réponse à la lecture de l'autre signal d'entrée (720), le signal d'abaissement (712) permettant d'abaisser la sortie (102) jusqu'à l'autre position de remplissage (640) étant émis dans l'étape (814) de fourniture à l'aide de l'autre valeur de position de remplissage.

5. Procédé selon l'une quelconque des revendications précédentes, dans lequel, dans l'étape de lecture (802), le signal d'entrée (710) indique des informations concernant un utilisateur choisissant la boisson et, dans l'étape d'émission (810), le signal d'enregistrement (718) permettant d'enregistrer la valeur de position de remplissage est émis, lequel indique la position de remplissage (540) associée à la boisson pour l'utilisateur.

6. Procédé selon l'une quelconque des revendications précédentes, comportant une étape (816) de fourniture d'un signal de remplissage (726) permettant de remplir le récipient (212 ; 612) avec la boisson lorsque la position de remplissage (540 ; 640) de la sortie (102) est réglée.

7. Procédé selon la revendication 6, comportant une étape (818) de fourniture d'un signal de rappel (728) permettant de rappeler la sortie (102) dans une position de repos (662) lorsque le récipient (212 ; 612) est rempli avec la boisson.

8. Dispositif (700) configuré pour exécuter les étapes du procédé (800) selon l'une des revendications 1 à 7 dans des appareils correspondants du dispositif.

9. Produit programme informatique comportant un code de programme permettant de réaliser le procédé selon l'une des revendications 1 à 7 lorsque le produit programme informatique est exécuté sur un dispositif selon la revendication 8.

10. Distributeur automatique de boissons (100) comportant un dispositif (700) selon la revendication 8, le capteur de contact (104) et l'appareil d'enregistrement (704).
